# EUROPEAN PATENT SPECIFICATION

(11) **EP 1 052 906 B1**
(45) Date of publication and mention of the grant of the patent: **02.05.2002**
(21) Application number: 99905165.9
(22) Date of filing: 27.01.1999
(51) Int. Cl.: A23F 5/14, A23F 5/40, A23G 9/02

(54) **ALIMENTARY PRODUCT BASED ON COFFEE, COCOA AND GUARANA**
AUF KAFFEE, KAKAO UND GUARANA BASIERTES NAHRUNGSMITTEL
PRODUIT ALIMENTAIRE A BASE DE CAFE, DE CACAO ET DE GUARANA

(30) Priority: 06.02.1998 IT PR980005
(43) Date of publication of application: 22.11.2000
(73) Proprietor: Rossi, Danilo, 43030 Parma (IT)
(72) Inventor: Rossi, Danilo, 43030 Parma (IT)
(74) Representative: Gotra, Stefano
(86) International application number: IT9900014
(87) International publication number: WO9939587

(56) References cited:
- EP-A- 0 396 260
- EP-A- 0 546 200
- DE-A- 1 901 277
- DE-A- 2 739 849
- DE-A- 19 540 014
- DE-C- 4 103 209
- GB-A- 2 285 578
- US-A- 4 663 176

## Description

### TECHNICAL FIELD AND BACKGROUND ART.

The present invention relates to an alimentary product based on coffee, cocoa and guarana.

In the alimentary sector, products based on coffee and cocoa, for example chocolates containing coffee, are already known.

The combination of coffee and cocoa is also widely used when drinking coffee since a chocolate is often served together with a cup of coffee.

Cocoa, in fact, if present in a balanced amount, together with coffee produces harmonious aromas which supplement and offset each other and also have an energetic effect.

Moreover, cocoa, when associated with coffee, improves the taste of the coffee mixtures, eliminating any bitter aftertastes arising from incorrect roasting of the coffee beans.

Within the sector of alimentary products there is, however, an increasing need to find new tastes and flavours which increase the qualities and properties of a certain product or distinguish a certain product.

From DE-A-1901277 is known a combination of coffee, tea, cola, guarana or mate in the form of a masticable product for counterbalancing an excessive consume of cigarettes.

GB-A-2 285 578 discloses the following "Caffeinated beverages have long been drunk for their stimulant properties and typical examples include tea, coffee and cocoa, as well as carbonated soft drinks such as colas. [...]Some of the qualities of these beverages may be improved, and further stimulating and enduring properties may be added by the incorporation of an amount of guaranine." (p.1 l.5-11)

### DISCLOSURE OF INVENTION.

The object of the present invention is that of eliminating the abovementioned drawbacks and providing an alimentary product having a new particular taste and a high quality.

In the present case the search for a new taste is combined with the search for an alimentary product which combines a long-term energetic effect with an improved, particular and refined taste.

Said objects are fully achieved by the alimentary product according to the present invention, which is characterized by the contents of the claims indicated below. It comprises a mixtures of coffee beans or ground coffee, cocoa and guarana in fine powder form in the following proportions: coffee 86-98% (and preferably 91-93%); cocoa 1-7% (and preferably 3.5 - 4.5%); guarana 1-7% (and preferably 3.5 - 4.5%).

The product is an energy-producing coffee supplied in cups (beverage).

These and other characteristic features will emerge more clearly from the following description of some preferred embodiments.

### BEST MODE FOR CARRYING OUT THE INVENTION.

The present invention relates to an alimentary product based on coffee and cocoa, the particular feature of which consists in the presence of guarana as claimed in claim 1.

The coffee, which is roasted, may be in the form of beans or ground or soluble and freeze-dried and, if necessary, decaffeinated.

The alimentary product is hot or cold liquid coffee.

In the specific case of coffee understood as a beverage, the strong and predominant taste of the coffee and the masking aroma of cocoa and the bitterness of the guarana combine together in the said product, enhancing each other.

This beverage, in addition to the invigorating effect provided by the coffee, also provides the almost instantaneous energy of cocoa and the prolonged energy produced by guarana.

Guarana is in fact a shrub of South American origin, the seed (or fruit) of which ground into a fine powder can be dissolved in water, thus providing a solution which is already known for its fatigue-combatting properties.

A further characteristic feature of guarana is that the energy supplied is not of the instantaneous type with a sudden peak and rapid decline, but has a more constant and longer lasting progression over time, without negative side effects such as irritability or hyper-excitability. Guarana is in fact used as an excellent tonic for cerebral activity and also improves the reflexes and increases the capacity to withstand fatigue.

Guarana in fine powder form is brownish, water-soluble, practically odourless and has a bitter and astringent taste.

Guarana added to coffee does not provide a pleasing final beverage since it is too bitter; in order to remedy this, it is necessary to add cocoa which manages to cover and eliminate the unpleasant bitterness of guarana, while at the same time enhancing the aroma of the coffee.

Therefore, the simultaneous presence of the three ingredients (coffee, cocoa and guarana) is required in order to obtain a positive taste effect with a gradual invigorating energy-producing action.

In the abovementioned beverage the strong and predominant taste of the coffee together with the masking aroma of the cocoa and bitterness of the guarana complement each other.

The coffee used in combination with the cocoa may be in the form of beans or ground. In particular, coffee in the form of beans, after roasting, may be subject to two different types of treatment.

A first treatment envisages hot-spraying the coffee beans which have just been toasted, with a solution of cocoa and guarana, the subsequent slow and constant mixing of the beans in a hot and ventilated environment in order to achieve drying, final packaging for an espresso mixture of the type used in bars, or grinding with vacuum-packaging for "mocha" type mixtures.

A second treatment envisages grinding the coffee which has just been roasted, subsequent mixing with cocoa and guarana in the form of a soluble fine powder and final vacuum-packaging:

Grinding of the coffee may be of the type producing a finer blend for espresso machines used in bars or less fine blend for domestic use ("mocha" type coffee).

The coffee thus obtained may be used also for the preparation of "cappuccino" and may be used as a hot or cold beverage.

After numerous experiments, the Applicant have reached the conclusion that the best energy/taste effects are achieved with the following proportion of ingredients:
coffee in the form of beans or ground coffee: 86-98% and preferably about 91-93%;
cocoa in soluble powder form: 1-7% and preferably about 3.5 - 4.5%;
guarana in soluble powder form: 1-7% and preferably about 3.5 - 4.5%.

The mixture of the three ingredients (coffee, cocoa and guarana) may also be used for making energetic drinks or ice-creams with a particular taste.

## Claims

1. Alimentary product based on coffee, cocoa and guarana, **characterized in that** it comprises a mixture of coffee in the form of bcans or ground coffee, cocoa in powder form and guarana in the form of fine powder in the following proportions:
coffee: 86-98%
cocoa: 1-7%
guarana: 1-7%

2. Alimentary product according to Claim 1, in which the proportions of the ingredients are: coffee 91-93%, cocoa 3.5 - 4.5%, guarana 3.5 - 4.5%.

3. Product according to Claim I, in which the coffee beans, after toasting, are hot-sprayed with a solution of cocoa and guarana and are subsequently left to dry prior to final packaging.

4. Product according to Claim 1, in which the coffee beans, after toasting, are ground and mixed with cocoa and guarana in the form of a soluble fine powder.

## Patentansprüche

1. Auf Kaffee, Kakao und Guarana basiertes Nahrungsmittel, **dadurch gekennzeichnet, dass** es eine Mischung aus Kaffee in Form von Bohnen oder gemahlenem Kaffee, pulverförmigem Kakao und feinpulverigem Guarana in folgendem Verhältnis umfasst:
Kaffee: 86-98%
Kakao: 1-7%
Guarana: 1-7%.

2. Nahrungsmittel nach Anspruch 1, bei dem das Verhältnis der Zutaten folgendermassen ist: Kaffee 91-93%, Kakao 3,5-4,5%, Guarana 3,5-4,5%.

3. Nahrungsmittel nach Anspruch 1, bei dem die Kaffeebohnen nach dem Rösten mit einer Lösung aus Kakao und Guarana unter Hitzeeinwirkung besprüht und danach trocknen gelassen werden, bevor sie abgepackt werden.

4. Nahrungsmittel nach Anspruch 1, bei dem die Kaffeebohnen nach dem Rösten gemahlen und mit Kakao und Guarana in Form von feinem löslichem Pulver vermischt werden.

## Revendications

1. Produit alimentaire à base de café, de cacao et de guarana, **caractérisé en ce qu'**il comprend une mixture de café sous la forme de grains de café moulu, de cacao en poudre et de guarana sous la forme d'une fine poudre, dans les proportions suivantes:
café: 86-98%
cacao: 1-7%
guarana: 1-7%.

2. Produit alimentaire selon la revendication 1, dans lequel les proportions des ingrédients sont: café 91-93%, cacao 3,5-4,5%, guarana 3,5-4,5%.

3. Produit alimentaire selon la revendication 1, dans lequel les grains de café, après la torréfaction, sont aspergés à chaud avec une solution de cacao et guarana, et sont ensuite laissés à sécher avant l'emballage final.

4. Produit alimentaire selon la revendication 1, dans lequel les grains de café, après la torréfaction, sont moulus et mélangés avec le cacao et le guarana sous la forme d'un fine poudre soluble.
